(19) Europäisches Patentamt
European Patent Office
Office européen des brevets

(11) **EP 4 722 045 A1**

(12) **EUROPEAN PATENT APPLICATION**

(43) Date of publication:
08.04.2026 Bulletin 2026/15

(21) Application number: 25201810.6

(22) Date of filing: 12.09.2025

(51) International Patent Classification (IPC):
**B60R 1/27** (2022.01)

(52) Cooperative Patent Classification (CPC):
**B60R 1/27;** B60R 2300/60; B60R 2300/607

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 03.10.2024 JP 2024174035

(71) Applicant: **AISIN CORPORATION**
Aichi 448-8650 (JP)

(72) Inventor: **WATANABE, Kazuya**
Kariya, Aichi, 448-8650 (JP)

(74) Representative: **TBK**
Bavariaring 4-6
80336 München (DE)

(54) **DRIVING ASSISTANCE DEVICE**

(57) A driving assistance device (1) includes: a captured image acquisition unit (10) configured to acquire a captured image obtained by capturing an image of surroundings of a host vehicle; an assistance image generation unit (10) configured to generate an assistance image (65) in which a wheel image (55) indicating a wheel is superimposed on the captured image in a region where a wheel of the host vehicle is located; and an image display unit (10) configured to display the assistance image on a display device (4). The wheel image is set to have a higher transmittance in an upper part away from a road surface than in a lower part close to the road surface.

## FIG. 8

**Description**

TECHNICAL FIELD

This disclosure relates to a driving assistance device that assists driving of a vehicle.

BACKGROUND DISCUSSION

In the related art, various methods are used as an information providing method for providing an occupant of a vehicle with various types of information for assisting traveling of the vehicle, such as route guidance and warning of obstacles. Examples thereof include a display by a liquid crystal display provided in the vehicle and a sound output from a speaker. Here, there are areas that are blind spots around the vehicle, that are difficult to be seen from a position of a driver, and to allow the driver to understand a situation in such blind spots, especially when performing special operations such as a parking operation, the surrounding images captured by cameras provided in the vehicle are displayed on the liquid crystal display in the related art.

As an example, Japanese Patent No. 5134504 discloses a technique of displaying an image of the surroundings of a vehicle captured by a camera on a liquid crystal display provided in the vehicle, and displaying an image of a wheel at a position of the wheel of a host vehicle in the image to clarify a direction in which the image of the surroundings of the vehicle displayed on the liquid crystal display is captured with respect to the vehicle. Meanwhile, when the image of the wheel is displayed, a blind spot is generated in the image of the surroundings of the vehicle displayed on the liquid crystal display due to the image of the wheel, there is also disclosed a technique of allowing a user to visually recognize a blind spot portion hidden by the image of the wheel by making the image of the wheel translucent.

In Japanese Patent No. 5134504 (paragraphs 0027 to 0035) (Reference 1), the visibility of the blind spot is ensured by making the image of the wheel translucent. However, when the transmittance of the image of the vehicle is excessively increased, the visibility of the blind spot increases, but the visibility of the wheel decreases, and the original purpose of displaying the image of the wheel cannot be achieved. In contrast, when the transmittance is reduced to be low so as not to be excessively high to visually recognize the image of the wheel, the visibility of the blind spot may decrease.

A need thus exists for a driving assistance device that achieves both visibility of a wheel image and visibility of a blind spot hidden by the wheel image when the wheel image is superimposed and displayed on a captured image.

SUMMARY

According to an aspect of this disclosure, a driving assistance device includes a captured image acquisition unit configured to acquire a captured image obtained by capturing an image of surroundings of a host vehicle; an assistance image generation unit configured to generate an assistance image in which a wheel image indicating a wheel is superimposed on the captured image in a region where a wheel of the host vehicle is located; and an image display unit configured to display the assistance image on a display device, in which the wheel image is set to have a higher transmittance in an upper part away from a road surface than in a lower part close to the road surface.

The "captured image obtained by capturing an image of the surroundings of a host vehicle" may be an image captured by an imaging device such as a camera or an image obtained by processing the captured image. For example, an image obtained by synthesizing images captured by a plurality of cameras or an image obtained by performing viewpoint conversion on the captured image may be used.

According to the driving assistance device of this disclosure having the above-described configuration, when the wheel image is superimposed and displayed on the captured image obtained by capturing an image of the surroundings of the host vehicle, the visibility of the blind spot can be ensured by setting the transmittance to be high in an upper part of the wheel image, which has a wide overlapping range with the captured image and creates many blind spots, while the visibility of the wheel image can also be ensured by setting the transmittance low in a lower part of the wheel image. Therefore, it is possible to achieve both the visibility of the wheel image and the visibility of the blind spot hidden by the wheel image.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a schematic configuration diagram of a vehicle according to the present embodiment;
Fig. 2 is a block diagram illustrating a configuration of a driving assistance device according to the present embodiment;
Fig. 3 is a flowchart of a driving assistance processing program according to the present embodiment;

Fig. 4 is a diagram illustrating a method for converting a captured image into an overhead image and a bird's-eye view image;

Fig. 5 is a diagram illustrating a method for generating the overhead image and the bird's-eye view image;

Fig. 6 is a diagram illustrating a wheel image;

Fig. 7 is a diagram illustrating an image obtained by synthesizing the wheel image to the bird's-eye view image;

Fig. 8 is a diagram illustrating an example of an assistance image displayed on a liquid crystal display;

Fig. 9 is a diagram illustrating an example in which the wheel image is rotated according to a vehicle behavior;

Fig. 10 is a flowchart of a sub-processing program of transmittance setting processing and transmittance updating processing;

Fig. 11 is a diagram illustrating polygons forming a surface of the wheel image;

Fig. 12 is a diagram illustrating a method for calculating a vertex normal vector;

Fig. 13 is a diagram illustrating an example of a reference vector;

Fig. 14 is a diagram illustrating a method for calculating a transmittance for a vertex of the polygon;

Fig. 15 is a diagram illustrating a method for setting a transmittance for a surface between vertices of the polygon; and

Fig. 16 is a diagram illustrating a transmittance set for the wheel image.

## DETAILED DESCRIPTION

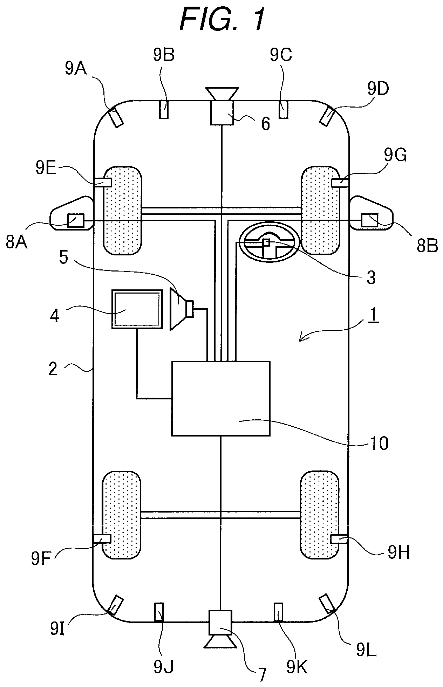

Hereinafter, a driving assistance device according to a specific embodiment disclosed here will be described in detail with reference to the drawings. First, a vehicle 2 equipped with a driving assistance device 1 according to the present embodiment will be described below. Fig. 1 is a schematic configuration diagram of the vehicle 2 according to the present embodiment.

Here, the vehicle 2 may be, for example, an automobile (an internal combustion engine automobile) using an internal combustion engine (an engine, or the like) as a drive source, an automobile (an electric automobile, a fuel cell automobile, or the like) using an electric motor (a motor or the like) as a drive source, or an automobile (a hybrid automobile) using both of the internal combustion engine and the electric motor as a drive source. Regardless of a type of the vehicle, the vehicle 2 may be an ordinary vehicle, a large truck for commercial use, a bus, construction machinery, or the like. In the following description, a four-wheeled vehicle is used, and a two-wheeled or three-wheeled vehicle may be used.

The vehicle 2 is a vehicle capable of manual driving traveling in which the vehicle travels based on a driving operation of a user, as well as assisted traveling using autonomous driving assistance in which the vehicle travels automatically without the driving operation of the user.

The autonomous driving assistance may be performed only under a specific situation such as when parking or leaving a garage, may be performed for all road sections, or may be performed only while the vehicle travels on a specific road section (for example, a highway with a gate (manned or unmanned, paid or free) at a boundary). In the following description, an autonomous driving section in which the autonomous driving assistance of the vehicle is performed includes a parking lot in addition to all road sections including general roads and highways. The autonomous driving assistance is performed only in a situation in which the user selects to perform the autonomous driving assistance (for example, turns on an autonomous driving start button) and it is determined that traveling by the autonomous driving assistance is possible. In contrast, the vehicle 2 may be a vehicle that can only perform assisted traveling by the autonomous driving assistance. Alternatively, the vehicle 2 may perform assisted traveling by the autonomous driving assistance only for traveling (that is, parking assistance) to a parking space when the vehicle is parked.

In vehicle control in the autonomous driving assistance according to the present embodiment, for example, a current position of the vehicle, a lane in which the vehicle travels, and positions of surrounding obstacles are detected at any time, and the vehicle control of a steering, a drive source, a brake, and the like, is automatically performed such that the vehicle travels along a generated travel trajectory at a speed according to a speed plan generated in the same manner. In particular, when parking assistance is performed, the vehicle control is automatically performed in which the parking space, which is a target into which the vehicle is to be parked, and a surrounding situation are confirmed using a detection result of a sensor or a camera, a parking trajectory to the parking space is calculated, the vehicle enters the parking space along the calculated parking trajectory, and the parking is completed. However, in the parking assistance, only a steering operation may be automatically performed, and the drive source and the brake may be controlled based on a manual operation. Alternatively, only guidance on the parking trajectory into the parking space or guidance on a vehicle operation may be performed, and a parking operation into the parking space may be manually performed by the user.

While the vehicle control of the steering, the drive source, the brake, and the like is automatically performed, an occupant of the vehicle can cancel the autonomous driving assistance at any timing by an own intention, and can stop the vehicle by executing a brake operation. When the autonomous driving assistance is performed, as will be described later, guidance for displaying a captured image of the surroundings of the vehicle captured by a camera on an in-vehicle display is performed, and an occupant of the vehicle can stop the vehicle by stopping the autonomous driving assistance by performing a brake operation as necessary while visually recognizing the display.

As illustrated in Fig. 1, the vehicle 2 includes an operation unit 3 that receives an operation from the occupant, a liquid crystal display 4 that displays a bird's-eye view image or an overhead image of the surroundings of the vehicle and other information related to driving assistance to the occupant, a speaker 5 that outputs audio guidance related to the driving assistance, a front camera 6, a rear camera 7, and side cameras 8A and 8B that capture images of the surroundings of the vehicle, ultrasonic sensors 9A to 9L that detect obstacles around the vehicle, and a driving assistance electronic control unit (ECU) 10 that performs various types of arithmetic processing based on received information. The driving assistance device 1 includes the driving assistance ECU 10 and other components.

Hereinafter, the components included in the vehicle 2 will be described. First, the operation unit 3 is disposed, for example, on a front surface of a steering wheel and includes operation buttons that are operated when the autonomous driving assistance is started, and the like. By operating the operation unit 3, the user can switch between the manual driving traveling in which the vehicle travels based on the driving operation of the user and the assisted traveling by the autonomous driving assistance in which the vehicle automatically travels without the driving operation of the user. The operation unit 3 may include a touch panel provided on a front surface of the liquid crystal display 4. A microphone and a voice recognition device may be further included.

The liquid crystal display 4 is a type of display device, is provided on an instrument panel of the vehicle 2, and displays a bird's-eye view image or an overhead image of the surroundings of the vehicle generated by performing viewpoint conversion and synthesis processing on captured images captured by cameras including the front camera 6, the rear camera 7, and the side cameras 8A and 8B during the execution of autonomous driving assistance. In particular, in the bird's-eye view image, a wheel image (tire image) indicating a wheel is also added and displayed in a region where the wheel of the host vehicle is located. The wheel image will be described in detail later. The liquid crystal display 4 may also be used in a navigation device.

The speaker 5 is provided on the instrument panel of the vehicle 2 and outputs a guidance voice or a warning sound related to the driving assistance. The speaker 5 may also be used in the navigation device.

The front camera 6 is, for example, an imaging device including a camera using a solid-state imaging element such as a CCD and is provided, for example, above a front bumper of the vehicle 2 or on a back side of a rear-view mirror with an optical axis direction thereof being directed to the front in the traveling direction of the vehicle.

The rear camera 7 is also an imaging device including a camera using a solid-state imaging element such as a CCD and is provided, for example, in the vicinity of an upper center of a license plate attached to the rear of the vehicle 2 with an optical axis direction thereof being directed to the rear of the vehicle.

The side cameras 8A and 8B are also imaging devices each including a camera using a solid-state imaging element such as a CCD, and are attached to, for example, left and right side mirrors of the vehicle 2 with optical axis directions thereof being directed to lateral sides of the vehicle.

Then, the driving assistance ECU 10 performs the viewpoint conversion and the synthesis processing on the captured images captured by the cameras including the front camera 6, the rear camera 7, and the side cameras 8A and 8B to generate the bird's-eye view image and the overhead image of the surroundings of the vehicle. During the execution of the autonomous driving assistance, by performing image recognition processing on the captured image, a partition line or an obstacle (another vehicle, a pedestrian, a bicycle, a wall, a guard rail, and other structures) around the vehicle is detected, and the autonomous driving assistance is executed based on a detection result thereof. In particular, when parking assistance is performed, the detection result of the obstacle obtained by the cameras is also used to confirm the parking space and the surrounding situation.

The ultrasonic sensors 9A to 9L are disposed at predetermined intervals on a front portion, a rear portion, and side portions of the vehicle, and transmit ultrasonic waves as probe waves to the surroundings of the vehicle 2 and receive reflected waves of the transmitted probe waves reflected by objects around the vehicle, thereby detecting the objects that reflect the probe waves. Specifically, the ultrasonic sensors 9A to 9L are of a type of distance measurement sensor that can detect a distance (distance measurement value) to the object that reflects the probe wave by measuring a time from the transmission to the reception. The ultrasonic sensors 9A to 9L can generate an output signal (including the distance to the detected object) corresponding to a reception result of the received wave and output the output signal to a control unit. Examples of an object serving as a detection target by the ultrasonic sensors 9A to 9L include an obstacle that needs to be avoided when the vehicle 2 travels, such as a person, a bicycle, another vehicle, and a wall, and an obstacle that forms the parking space. As the distance measurement sensor, a millimeter wave sensor or a laser sensor may be used instead of the ultrasonic sensor.

Installation positions and the installation directions of the respective ultrasonic sensors 9A to 9L can be set as appropriate. In the present embodiment, to set a detection range of the object to all orientations including the front, rear, and left and right directions of the traveling direction of the vehicle 2, the ultrasonic sensors 9A to 9D are provided on a front side of the vehicle 2 being directed to the traveling direction such that a transmission direction of the probe wave is forward in the traveling direction of the vehicle. The ultrasonic sensors 9E and 9F are provided on a left side surface of the vehicle 2 being directed to a left direction such that the transmission direction of the probe wave is leftward in the traveling direction of the vehicle. The ultrasonic sensors 9G and 9H are provided on a right side surface of the vehicle 2 being directed to a right direction such that the transmission direction of the probe wave is rightward in the traveling direction of the vehicle. The ultrasonic sensors 9I to 9L are provided on a rear surface of the vehicle 2 being directed to a direction opposite to the traveling direction such that the transmission direction of the probe wave is toward the rear of the vehicle. The ultrasonic sensors 9A to 9L have substantially the same height from a ground surface.

In the present embodiment, among the ultrasonic sensors 9A to 9L, in particular, the ultrasonic sensors 9A to 9D on the front surface of the vehicle 2 and the ultrasonic sensors 9I to 9L on the rear surface of the vehicle 2 are provided at positions at which reflected waves can be received as indirect waves between adjacent sensors. Therefore, it is possible to determine not only the distance to the object but also a specific position (a relative position with respect to the vehicle) of the object using triangulation by receiving direct waves and indirect waves as received waves. Although the ultrasonic sensors 9E to 9H on the lateral sides cannot receive indirect waves because they are provided apart from one another, a specific position (a relative position with respect to the vehicle) of the object can also be specified by triangulation using a measured distance of a previous position, a measured distance of a current position, and a movement distance therebetween as the vehicle moves.

The driving assistance ECU 10 is an electronic control unit that performs various types of processing related to the autonomous driving assistance. For example, the current position of the vehicle, the lane in which the vehicle travels, and the positions of surrounding obstacles are detected at any time, and the vehicle control of a steering, a drive source, a brake, and the like is performed such that the vehicle travels along a generated travel trajectory at a speed according to a speed plan generated in the same manner. In particular, when parking assistance is performed, the vehicle control is performed in which the parking space, which is a target into which the vehicle is to be parked, and a surrounding situation are confirmed using detection results of the front camera 6, the rear camera 7, the side cameras 8A and 8B, and the ultrasonic sensors 9A to 9L described above, a parking trajectory to the parking space is calculated, the vehicle enters the parking space along the calculated parking trajectory, and the parking is completed. The bird's-eye view image or the overhead image of the surroundings of the vehicle generated from the captured image by the camera described above is displayed on the liquid crystal display 4, and the wheel image indicating a wheel is added and displayed in a region where the wheel of the host vehicle is located. The driving assistance ECU 10 is connected to the operation unit 3, the liquid crystal display 4, the speaker 5, the front camera 6, the rear camera 7, the side cameras 8A and 8B, and the ultrasonic sensors 9A to 9L described above via an in-vehicle network such as a CAN. The driving assistance ECU 10 is also connected to various sensors such as a vehicle speed sensor, an acceleration sensor, a gyro sensor, a steering sensor, and a shift position sensor mounted on the vehicle 2, a navigation device as an in-vehicle device, and the like. A detailed configuration of the driving assistance ECU 10 will be described later.

In addition to the components illustrated in Fig. 1, the vehicle 2 includes basic components as the vehicle 2. However, only a configuration related to control of the autonomous driving assistance and control related to the configuration will be described.

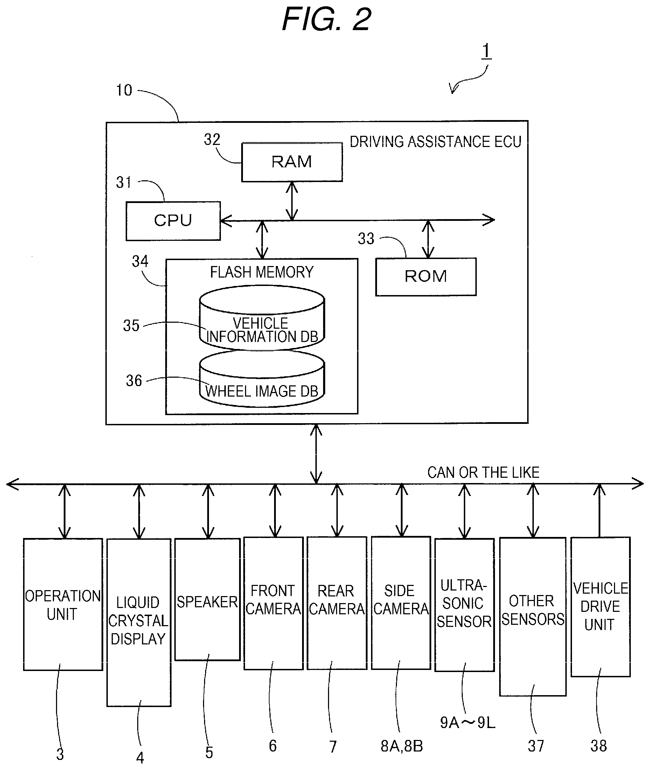

Next, the driving assistance ECU 10 of the driving assistance device 1 included in the vehicle 2 will be described in detail. Fig. 2 is a block diagram illustrating a configuration of the driving assistance device 1 according to the present embodiment.

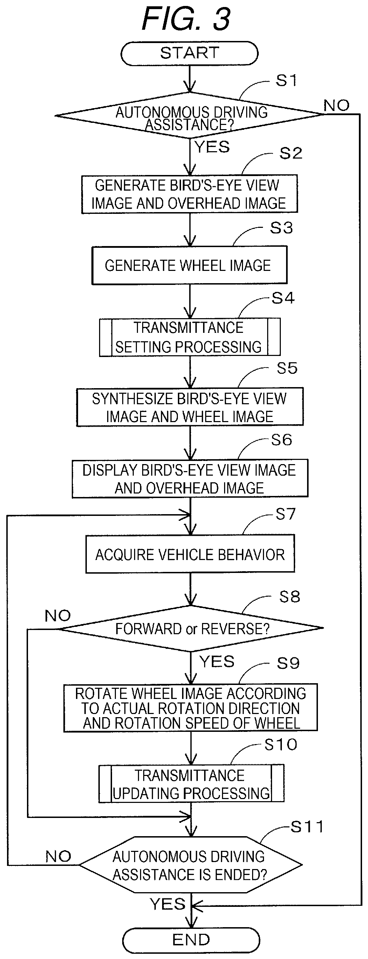

As illustrated in Fig. 2, the driving assistance ECU 10 is an electronic control unit that performs overall control of the driving assistance device 1, and includes a CPU 31 serving as an arithmetic device and a control device and internal storage devices such as a RAM 32 that is used as a working memory when the CPU 31 performs various types of arithmetic processing and that stores travel trajectory data and the like when the travel trajectory is calculated, a ROM 33 in which, for example, a driving assistance processing program (see Fig. 3) to be described later is recorded in addition to control programs, and a flash memory 34 that stores a program read from the ROM 33. The driving assistance ECU 10 includes various units as processing algorithms. For example, a captured image acquisition unit acquires a captured image obtained by capturing an image of the surroundings of the host vehicle. An assistance image generation unit generates an assistance image in which the wheel image indicating a wheel is superimposed on the captured image at a region where the wheel of the host vehicle is located. An image display unit displays the assistance image on the display device. A behavior acquisition unit acquires a behavior of the host vehicle. An image updating unit rotates the wheel image in the assistance image around a wheel axis according to the behavior of the host vehicle. That is, the driving assistance ECU 10 is an example of the captured image acquisition unit, the assistance image generation unit, the image display unit, the behavior acquisition unit, and the image updating unit.

The driving assistance ECU 10 is also connected to various sensors 37 for detecting behaviors of the vehicle, such as a vehicle speed sensor, a wheel speed sensor, an acceleration sensor, a gyro sensor, a steering sensor, and a shift position sensor, and a drive unit 38 of the vehicle, such as a steering wheel, a brake, an accelerator, and a transmission. A current behavior of the vehicle is detected based on detection results of these sensors 37, and the autonomous driving assistance for the vehicle 2 is performed by controlling the drive unit 38. As specific contents of autonomous driving assistance, for example, the current position of the vehicle, the lane in which the vehicle travels, and the positions of surrounding obstacles are detected at any time, and the vehicle control of a steering, a drive source, a brake, and the like is performed such that the vehicle travels along a generated travel trajectory at a speed according to a speed plan generated in the same manner. However, only a steering operation may be automatically performed, and the drive source and the brake may be controlled based on a manual operation.

The flash memory 34 includes a vehicle information DB 35 and a wheel image DB 36. The vehicle information DB 35 stores various types of information related to the vehicle 2. For example, installation positions (heights from the ground surface and positions in a left-right direction) and detection axes (optical axes with the camera) of the cameras and the ultrasonic sensors 9A to 9L provided in the vehicle 2, a total length, a vehicle width, a wheelbase, a minimum turning radius, and the like are stored. The type of tire and the tread pattern included in the vehicle as initial equipment are also stored. Such these pieces of information are input in advance by the occupant or a person on a vehicle manufacturer side.

In contrast, the wheel image DB 36 stores various types of information used when drawing a 3D model image (hereinafter, referred to as the wheel image) indicating an appearance of the wheel (basically, only a tire portion, but may also include a wheel hub) included in the host vehicle. Specifically, as various types of information used when drawing the wheel image, the wheel image DB 36 stores information necessary for executing processing of creating a 3D CG, such as modeling, scene layout setting, and rendering, a texture image to be attached to a created 3D CG model, and the like. A wheel image in a completed state may be stored in the wheel image DB 36. When the wheel image in a completed state is stored, it is desirable to store a wheel image in which the type of the tire and the tread pattern included in the host vehicle are faithfully reproduced, but a common vehicle image may be stored regardless of the type of the tire and the tread pattern included in the host vehicle.

Next, the driving assistance processing program executed by the driving assistance ECU 10 in the driving assistance device 1 having the above-described configuration will be described with reference to Fig. 3. Fig. 3 is a flowchart of the driving assistance processing program according to the present embodiment. Here, the driving assistance processing program is a program that is executed after an accessory (ACC) power supply of the vehicle 2 is turned on and supports the user by using a bird's-eye view image or an overhead image of the surroundings of the vehicle while the autonomous driving assistance of the vehicle is performed.

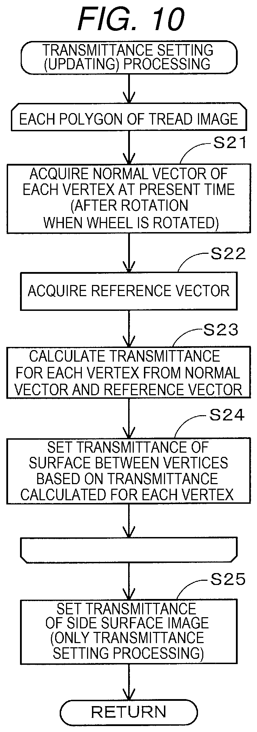

However, in the following embodiment, the bird's-eye view image or the overhead image of the surroundings of the vehicle is displayed while the autonomous driving assistance of the vehicle is performed, but it is not necessary to display the bird's-eye view image or the overhead image of the surroundings of the vehicle only while the autonomous driving assistance is performed, and the bird's-eye view image or the overhead image of the surroundings of the vehicle may be displayed even when the vehicle is traveling by manual driving. Alternatively, the bird's-eye view image or the overhead image of the surroundings of the vehicle may be displayed only when specific autonomous driving assistance, such as parking assistance, is performed. The programs illustrated in the flowcharts in Figs. 3 and 10 are stored in the RAM 32 or the ROM 33 included in the driving assistance device 1 and are executed by the CPU 31.

First, in step (hereinafter abbreviated as S) 1, the CPU 31 determines whether assisted traveling by the autonomous driving assistance is performed. As described above, a determination condition may be that specific autonomous driving assistance, such as parking assistance, is performed.

In the present embodiment, the assisted traveling by the autonomous driving assistance is performed in a situation in which the user operates the operation unit 3 to select to perform the autonomous driving assistance, and it is determined that the vehicle can travel by the autonomous driving assistance. As contents of the autonomous driving assistance, for example, the current position of the vehicle, the lane in which the vehicle travels, and the positions of surrounding obstacles are detected at any time, and the vehicle control of a steering, a drive source, and a brake is automatically performed such that the vehicle travels along a generated travel trajectory at a speed according to a speed plan generated in the same manner. In particular, in the case of parking assistance, the vehicle control until parking in a parking space is automatically performed. However, only a steering operation may be automatically performed, and the drive source and the brake may be controlled based on a manual operation.

Then, if it is determined that the assisted traveling by the autonomous driving assistance is performed (YES in S1), the processing proceeds to S2. On the other hand, if it is determined that the assisted traveling by the autonomous driving assistance is not performed (NO in S1), the driving assistance processing program is ended.

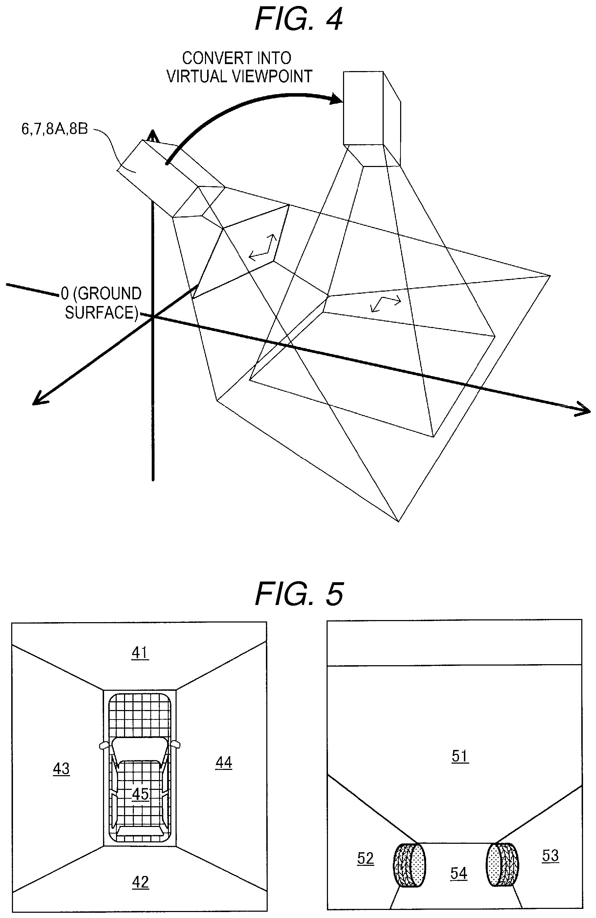

In S2, the CPU 31 generates a bird's-eye view image in which the surroundings of the vehicle are viewed obliquely downward from the sky and an overhead image in which the surroundings of the vehicle are viewed vertically downward from the sky based on real-time captured images captured by the front camera 6, the rear camera 7, and the side cameras 8A and 8B. For example, a method for generating the overhead image in which the surroundings of the vehicle are viewed vertically downward from the sky will be described below. As illustrated in Fig. 4, the real-time captured image captured by each camera is projected onto a virtual projection surface that is a horizontal plane corresponding to a height from the ground surface, and the captured image projected onto the virtual projection surface is converted into an image viewed from a virtual viewpoint looking down in a vertical direction from above the vehicle 2, thereby generating the overhead image of each camera. The conversion to the image viewed from the virtual viewpoint (viewpoint conversion) is performed by first converting each coordinate in a captured image coordinate system set along a plane perpendicular to the optical axis of the camera, into each coordinate in a ground surface coordinate system set along the ground surface, and then converting each coordinate into each coordinate in an overhead image coordinate system. Conversion formulas used for coordinate conversion are already known, and therefore, the description thereof will be omitted. Then, as illustrated in Fig. 5, an overhead image 41 obtained by converting the viewpoint of the captured image captured by the front camera 6, an overhead image 42 obtained by converting the viewpoint of the captured image captured by the rear camera 7, an overhead image 43 obtained by converting the viewpoint of the captured image captured by the side camera 8A, and an overhead image 44 obtained by converting the viewpoint of the captured image captured by the side camera 8B are synthesized (connected), and an illustration image 45 schematically indicating the host vehicle is inserted between the overhead images 41 to 44 to generate the overhead image.

Since the bird's-eye view image is basically processed in the same manner as the generation of the overhead image, except that the angle of the line-of-sight direction at the time of viewpoint conversion is different, the description thereof will be omitted. However, the virtual viewpoint of the bird's-eye view image is in the vehicle (that is, a viewpoint of the occupant). Accordingly, the overhead image obtained by converting the viewpoint of the captured image captured by the rear camera 7 is excluded from the composition target. In the case of the bird's-eye view image in which the rear of the vehicle is obliquely viewed downward at the time of reversing, the overhead image obtained by converting the viewpoint of the captured image captured by the front camera 6 is excluded from the composition target. As for the bird's-eye view image, as illustrated in Fig. 5, a bird's-eye view image 51 obtained by converting the viewpoint of the captured image captured by the front camera 6, a bird's-eye view image 52 obtained by converting the viewpoint of the captured image captured by the side camera 8A, and a bird's-eye view image 53 obtained by converting the viewpoint of the captured image captured by the side camera 8B are synthesized (connected). A region between the bird's-eye view images 51 to 53 is a region where a body of the host vehicle is located, but as will be described later, to display the wheel image in the region to allow the user to visually recognize the wheel image, an image of the body of the host vehicle is not displayed, and a road surface image 54 is displayed. The road surface image 54 is preferably an image that does not give a sense of discomfort to the surroundings, and for example, it is possible to cut out a current position of the host vehicle from an image previously captured by the front camera 6 and synthesize the image. In the example illustrated in Fig. 5, the virtual viewpoint of the bird's-eye view image is in the vehicle (that is, the viewpoint of the occupant), but the position of the virtual viewpoint can be changed as appropriate.

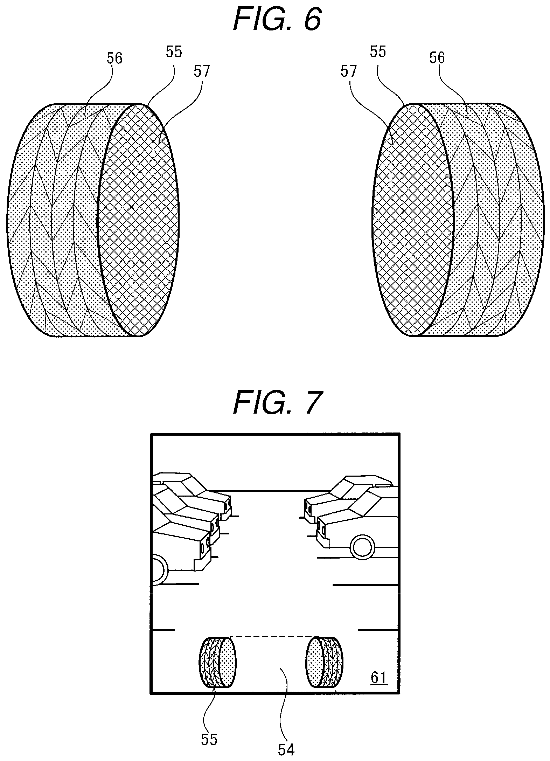

Thereafter, in S3, the CPU 31 generates a wheel image 55 indicating the appearance of the wheel of the host vehicle. Here, the wheel image 55 is a three-dimensional polygon image. Fig. 6 is a diagram illustrating an example of the wheel image 55 generated in S3. There are four wheels of a right front wheel, a left front wheel, a right rear wheel, and a left rear wheel as the wheels of the host vehicle. The wheel images basically have the same appearance, and for example, the wheel images 55 of the right front wheel and the left front wheel are illustrated in the example illustrated in Fig. 6. The wheel image 55 is basically an image of only a tire portion excluding the wheel hub, and may also include the wheel hub. An axle may also be included. The wheel image 55 includes at least an image (hereinafter, referred to as a tread image 56) corresponding to a tread portion (ground contact portion) of the wheel that is contact with the road surface and an image (hereinafter, referred to as a side surface image 57) of a portion (ground non-contact portion) corresponding to a side surface of the wheel that is not in contact with the road surface, and a tread pattern is drawn in the tread image 56 as illustrated in Fig. 6. Here, it is desirable that the information related to the type of tire and the tread pattern included in the host vehicle as initial equipment is stored in the vehicle information DB 35 in advance, and that the wheel image 55 is an image in which the type of tire and the tread pattern included in the host vehicle are reproduced using the information.

Various material settings and mapping processing may be performed on the wheel image 55. Examples of the mapping processing include texture mapping in which an image of a texture is attached to a surface of an object, and bump mapping in which a reflection direction of light is changed to form fine irregularities. For example, the texture image is an image in which effects such as shading, transmission, and reflection are drawn, and each effect of the texture image is drawn not to be unnatural in consideration of an arrangement orientation, surrounding brightness, a position of a light source (for example, sunlight or street light), and the like when the wheel image 55 is arranged in the bird's-eye view image in S5 to be described later.

In S3, the CPU 31 may create the wheel image 55 illustrated in Fig. 6 by executing processing such as modeling, scene layout setting, and rendering by using the information stored in the wheel image DB 36, or may acquire the wheel image 55 by storing the wheel image 55 completed in advance in the wheel image DB 36 and reading the wheel image 55 from the wheel image DB 36 in S3.

Subsequently, in S4, transmittance setting processing (Fig. 10) to be described later is performed. In the transmittance setting processing, a transmittance of the wheel image 55 is set. In particular, the tread image 56 and the side surface image 57 are set to have different transmittances, the tread image 56 is set to have a higher transmittance in an upper part away from the road surface than in a lower part close to the road surface, and the side surface image 57 is set to have the same transmittance regardless of a distance from the road surface. More details will be described below.

Subsequently, in S5, the CPU 31 synthesizes the wheel image 55 generated in S3 and having the transmittance set in S4 with the bird's-eye view image generated in S2. Specifically, the wheel image 55 is added to the bird's-eye view image in a region where the wheel of the host vehicle is located. Fig. 7 is a diagram illustrating a bird's-eye view image 61 synthesized with the wheel images 55.

The example illustrated in Fig. 7 indicates a case where the wheel images 55 are synthesized with the bird's-eye view image 61 of the front in the traveling direction of the vehicle generated when the vehicle moves forward, and the wheel image 55 of the right front wheel and the wheel image 55 of the left front wheel are added to the regions corresponding to the right front wheel and the left front wheel of the host vehicle. The wheel image 55 of the right front wheel and the wheel image 55 of the left front wheel are symmetrical and basically the same image. A region surrounded by a broken line in Fig. 7 between the wheel image 55 of the right front wheel and the wheel image 55 of the left front wheel is a region where the body of the host vehicle is located as described above, and the road surface image 54 of the current position of the host vehicle is displayed without displaying the image of the body of the host vehicle to visually recognize the wheel images 55.

Although details are omitted, when the vehicle is reversing, the wheel image 55 of the right rear wheel and the wheel image 55 of the left rear wheel are similarly synthesized with the bird's-eye view image 61 of the rear of the vehicle. The wheel images 55 of the front wheels and the wheel images 55 of the rear wheels may have different designs such that the front wheels and the rear wheels can be distinguished.

Thereafter, in S6, the CPU 31 displays, on the liquid crystal display 4, a real-time bird's-eye view image and overhead image indicating the current environment around the vehicle generated in S2. An image synthesized with the wheel image 55 in S5 is displayed as the bird's-eye view image. In the present embodiment, both the bird's-eye view image and the overhead image are displayed on the liquid crystal display 4 at the same time. However, only one of the bird's-eye view image and the overhead image may be displayed, or the bird's-eye view image and the overhead image may be switched and displayed by a user operation. The bird's-eye view image and the overhead image displayed on the liquid crystal display 4 are hereinafter referred to as an assistance image 65.

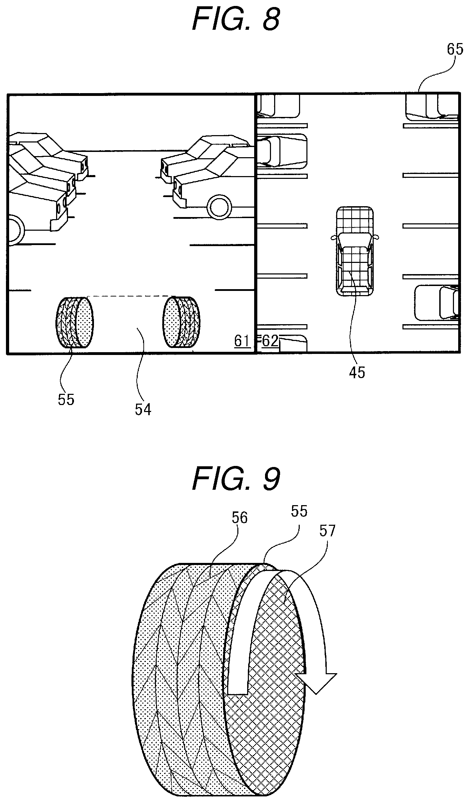

Here, Fig. 8 is a diagram illustrating an example of the assistance image 65 displayed on the liquid crystal display 4 in S6. As illustrated in Fig. 8, the assistance image 65 has a two-screen configuration divided into left and right, the bird's-eye view image 61 is displayed on the left side, and an overhead image 62 is displayed on the right side. Fig. 8 particularly illustrates a case where the vehicle is moving forward, and a bird's-eye view image viewing down obliquely ahead in the traveling direction is displayed as the bird's-eye view image 61. When the vehicle is reversing, a bird's-eye view image viewing down obliquely rearwards is displayed as the bird's-eye view image 61. As a result, the user can grasp the environment around the vehicle by clarifying the relative relationship with the host vehicle position including areas that are difficult to directly visually recognize. The CPU 31 may calculate a future movement trajectory of the vehicle based on a detection value of a vehicle speed sensor, a steering sensor, or the like, and display the movement trajectory superimposed on the bird's-eye view image 61 and the overhead image 62. Thereafter, the assistance image 65 is continuously displayed until the assisted traveling by the autonomous driving assistance is ended (YES in S11) and is updated at a preset frame rate, and a real-time image of the surroundings of the vehicle is displayed. As will be described later, the wheel image 55 included in the assistance image 65 is rotated according to the actual behavior of the host vehicle. For example, when the vehicle moves forward, the wheel image 55 is also rotated in the forward direction, and when the vehicle reverses, the wheel image 55 is also rotated in the reversing direction.

Next, in S7, the CPU 31 acquires the behavior of the host vehicle. Specifically, the current traveling direction and vehicle speed of the vehicle are specified and acquired based on a vehicle speed pulse output from the vehicle speed sensor and a shift position. The traveling direction and the vehicle speed of the vehicle also correspond to the rotation direction and the rotation speed of the wheels of the vehicle. The turning angle of the vehicle may also be acquired using a steering sensor. The turning angle of the vehicle also corresponds to the angle of the wheels of the vehicle.

Subsequently, in S8, the CPU 31 determines whether the vehicle is moving forward or reversing based on the behavior of the vehicle acquired in S7.

If it is determined that the vehicle is moving forward or reversing (YES in S8), the processing proceeds to S9. On the other hand, if it is determined that the vehicle is stopped (NO in S8), the processing proceeds to S11.

In S9, the CPU 31 updates the wheel image 55 included in the assistance image 65 according to the vehicle behavior. Specifically, the wheel image 55 displayed in the assistance image 65 is also rotated about the wheel axis (a center of the wheel image 55) according to the actual rotation direction and rotation speed of the wheel of the host vehicle. However, the rotation speed of the wheel image 55 does not necessarily have to be the same as the actual rotation speed of the wheel, and for example, the wheel image 55 may be rotated at a predetermined ratio (for example, 1/2) of the actual rotation speed. Alternatively, an upper limit may be set for the rotation speed. With the rotation of the wheel image 55, the tread pattern included in the tread image is also integrally rotated. When the wheel image 55 is rotated, the wheel image 55 is updated at a preset frame rate.

As a result, for example, when the host vehicle is moving forward, the wheel image 55 is rotated in the forward direction (forward of the screen) as illustrated in Fig. 9. In contrast, when the host vehicle is reversing, the wheel image 55 is rotated in the reversing direction. When the host vehicle is reversing, the bird's-eye view image 61 of the rear of the host vehicle, which is a direction opposite to that when the host vehicle is moving forward, is displayed, and as a result, the rotation direction of the wheel image 55 included in the bird's-eye view image 61 is the same as that when the host vehicle is moving forward (a direction toward the front of the screen illustrated in Fig. 9).

When the turning angle of the host vehicle is acquired as the behavior of the host vehicle in S7, the angle (the traveling direction) of the wheel image 55 displayed in the assistance image 65 may be changed according to the actual angle of the wheel of the host vehicle.

Subsequently, in S10, transmittance updating processing (Fig. 10) to be described later is performed. In the transmittance updating processing, the transmittance is reset (updated) for the wheel image 55 rotated in S9. In the wheel image 55, the side surface image 57 has the same transmittance regardless of the distance from the road surface, and therefore, the transmittance is updated only for the tread image 56 in contact with the road surface. However, the transmittance updating processing in S10 may be performed including the side surface image 57. Even in this case, the transmittance of the side surface image 57 does not change as a result. In contrast, the transmittance of the tread image 56 is updated such that the transmittance is higher in an upper part away from the road surface than in a lower part close to the road surface after the rotation. More details will be described below.

Thereafter, in S11, the CPU 31 determines whether to end the assisted traveling by the autonomous driving assistance. Here, for example, a condition for ending the assisted traveling by the autonomous driving assistance is, for example, in the case of parking assistance, completion of parking in a parking space. The condition may be that the user performs a predetermined end operation with the operation unit 3, or that a shift position is shifted to "P" or the engine is turned off. The end condition may be in a situation in which the autonomous driving assistance cannot be continued.

If it is determined that the assisted traveling by the autonomous driving assistance is ended (YES in S11), the driving assistance processing program is ended. On the other hand, if it is determined that the assisted traveling by the autonomous driving assistance is not ended (NO in S11), the processing returns to S7, and the assistance image is continuously displayed on the liquid crystal display 4.

Next, sub-processing of the transmittance setting processing executed in S4 and the transmittance updating processing executed in S10 will be described with reference to Fig. 10. Since the transmittance setting processing executed in S4 and the transmittance updating processing executed in S10 are substantially the same processing, they will be collectively described below. Fig. 10 is a flowchart of a sub-processing program of the transmittance setting processing and the transmittance updating processing.

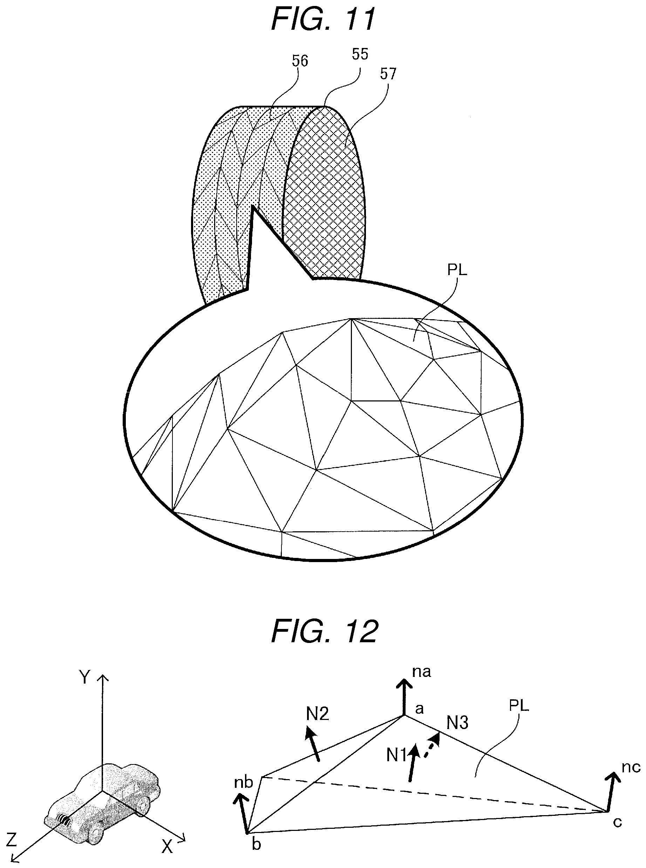

Here, the transmittance setting processing and the transmittance updating processing are processing of setting the transmittance of the wheel image 55, and in particular, a transmittance is set for each polygon included in the wheel image 55. Processing in S21 to S24 described below is performed on polygons included in the wheel image 55 generated in S3, particularly polygons included in the tread image 56. The processing in S21 to S24 is performed on all the target polygons, the transmittance is set, and then the processing proceeds to S25. The wheel image 55 is a three-dimensional polygon image as described above, and a constituent surface (a surface) of the wheel image 55 is formed by a plurality of polygons PL as illustrated in Fig. 11. That is, the wheel image 55 has a three-dimensional shape formed by combining the plurality of polygons PL. The processing in S21 to S24 is performed for each polygon PL.

However, the target of the processing in S21 to S24 may be limited to only polygons PL in a range (a display range) that can be visually recognized by the user when the wheel image 55 is synthesized with the bird's-eye view image in S5. That is, even when the polygon PL is included in the wheel image 55, if the polygon PL is not in the range that can be visually recognized by the user, for example, if the polygon PL is located on a side opposite to the virtual viewpoint with respect to the wheel axis, it is not necessary to set the transmittance as it is not a target to be drawn in the assistance image 65. Therefore, such a polygon PL may be excluded from the processing target. Among the polygons included in the wheel image 55, particularly, for the polygons included in the side surface image 57, the transmittance is set in S25 to be described later.

First, in S21, the CPU 31 acquires a normal vector of each vertex (hereinafter referred to as a vertex normal vector) at the current time point for the polygon PL to be processed. In the transmittance updating processing, the vertex normal vector after the rotation processing in S9 is acquired.

Hereinafter, the processing in S21 will be described with a specific example. In the following example, the polygon PL is assumed to be a triangular polygon PL to simplify the description, but a shape of the polygon PL is not limited to a triangular shape and may be various polygonal shapes, such as a quadrangular shape. For the vertices of the polygon PL, although three vertices of the polygon PL are connected with each other, four or more vertices of the polygon PL may be connected with each other.

For example, as illustrated in Fig. 12, since the triangular polygon PL has three vertices a to c, a vertex normal vector na of the vertex a, a vertex normal vector nb of the vertex b, and a vertex normal vector nc of the vertex c are acquired as the vertex normal vectors. Here, the vertex normal vector is calculated from each surface normal vector of each polygon PL to which the vertex belongs. For example, when the vertex normal vector na in Fig. 12 is described as an example, to the vertex of the vertex normal vector na, three different polygons PL belong, and the surface normal vector of each polygon PL is N1, N2, and N3. The surface normal vector is a vector perpendicular to the surface and can be calculated from a vector connecting the vertices constituting the surface. For example, for the surface normal vector N1, the surface normal vector N1 can be calculated by calculating a cross product of a vector extending from the vertex a to the vertex b and a vector extending from the vertex a to the vertex c. Similarly, the surface normal vector N2 and the surface normal vector N3 can also be calculated.

After calculating the surface normal vectors N1 to N3 of each surface, the CPU 31 calculates the vertex normal vector na by adding and normalizing all the surface normal vectors. Similarly, the vertex normal vector nb of the vertex b and the vertex normal vector nc of the vertex c are calculated by adding and normalizing all the surface normal vectors of the polygons PL to which the vertices belong. Although an example in which three polygons PL belong to the vertex has been described with reference to Fig. 12, the calculation method is basically the same even when four or more polygons PL belong, except that the number of surface normal vectors to be added increases. The normal vectors na to nc of the vertices may use results calculated in advance. Since the normal vector of each vertex is determined by the polygon shape, the normal vector can be calculated in advance. In S21 and subsequent steps, each vector is calculated in a three-dimensional orthogonal coordinate system in which the traveling direction of the host vehicle is set as a Z axis and the vertical direction is set as a Y axis, as illustrated in Fig. 12.

Meanwhile, in the transmittance updating processing performed in S10, it is also possible to calculate the vertex normal vector corresponding to the rotation of the wheel by using the normal vector and the rotation matrix of each vertex calculated in advance based on the polygon shape.

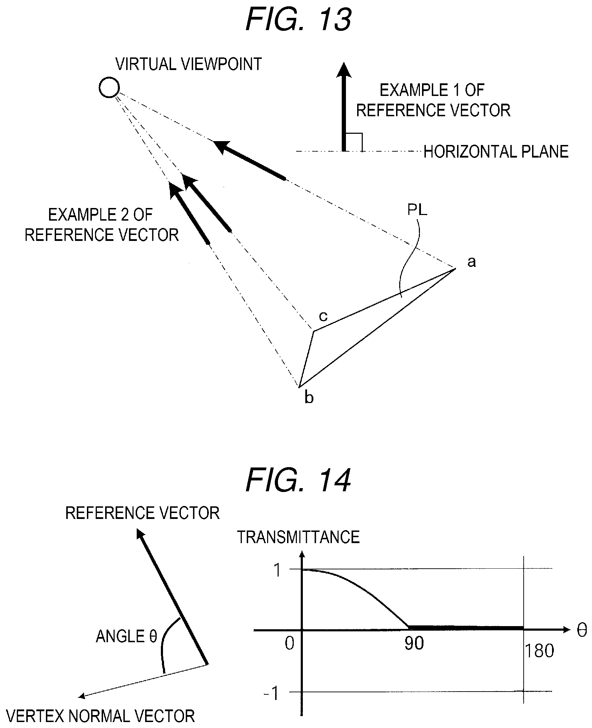

Subsequently, in S22, the CPU 31 acquires a reference vector. The reference vector is a vector serving as a reference when setting the transmittance of each polygon, and is a vector indicating a direction in which the wheel image 55 is most desired to be transparent. In the present embodiment, the reference vector is either a "vector corresponding to the vertical direction" or a "vector corresponding to the line-of-sight direction from the virtual viewpoint of the bird's-eye view image". As illustrated in Fig. 13, the "vector corresponding to the vertical direction" is more specifically a vertically upward vector, and the "vector corresponding to the line-of-sight direction from the virtual viewpoint of the bird's-eye view image" is more specifically a vector indicating a direction from each of the vertices a to c of the polygon PL to be processed to the virtual viewpoint.

Thereafter, in S23, the CPU 31 calculates a transmittance for each vertex of the polygon PL to be processed based on the vertex normal vector acquired in S21 and the reference vector acquired in S22. Basically, a vertex having a vertex normal vector with a small difference from the reference vector is calculated to have a high transmittance, and a vertex having a vertex normal vector with a large difference from the reference vector is calculated to have a low transmittance.

Hereinafter, the processing in S23 will be described with a specific example. As illustrated in Fig. 14, when an angle formed by a vertex normal vector of a vertex whose transmittance is to be calculated and the reference vector acquired in S22 is set as $\theta$, a transmittance t is calculated by, for example, the following equation (1).

$$t = \cos\theta \ (\text{when } \cos\theta > 0), \ t = 0 \ (\text{when } \cos\theta \le 0)\dots (1)$$

The transmittance is 100% (completely transparent) at t = 1, and the transmittance is 0% (non-transparent) at t = 0. That is, the transmittance = t $\times$ 100%.

When the reference vector is a vector indicating a direction from each vertex of the polygon PL to the virtual viewpoint, a vector indicating a direction from a vertex whose transmittance is to be calculated to the virtual viewpoint is used as the reference vector. An upper limit value or a lower limit value may be set for the transmittance t calculated by the above equation (1). Accordingly, it is possible to prevent the visibility of the captured image from being lowered due to the transmittance being excessively lowered. Similarly, it is possible to prevent the visibility of the wheel image 55 from being lowered due to the transmittance being excessively increased. For example, the upper limit value can be set to 90%, and the lower limit value can be set to 10%. A value of the transmittance t may be adjusted by multiplying the transmittance t calculated by the above equation (1) by a predetermined coefficient (for example, a transmittance of the entire polygon).

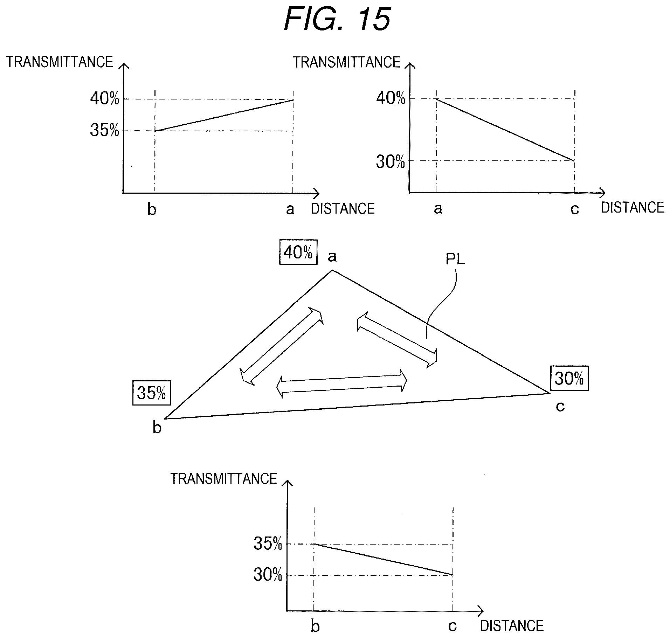

Subsequently, in S24, the CPU 31 sets a transmittance for a surface of the polygon PL to be processed based on the transmittance of each vertex calculated in S23. Specifically, the transmittance of the surface of the polygon PL is set by the transmittance of each vertex set in S23 and a distance from each vertex. For example, as illustrated in Fig. 15, when a case where the transmittance of the vertex a is set to 40%, the transmittance of the vertex b is set to 35%, and the transmittance of the vertex c is set to 30% is described as an example, the transmittance is set such that the transmittance linearly and smoothly changes from 35% to 40% from the vertex b to the vertex a between the vertex b and the vertex a. The transmittance is set such that the transmittance changes linearly and smoothly from 40% to 30% from the vertex a toward the vertex c between the vertex a and the vertex c. The transmittance is set such that the transmittance changes linearly and smoothly from 35% to 30% from the vertex b toward the vertex c between the vertex b and the vertex c. That is, the CPU 31 sets the transmittance such that the transmittance at each vertex of the polygon PL to be processed is the transmittance calculated in S23, and the transmittance of the surface between the vertices changes as smoothly as possible without causing a sudden change.

Then, the processing in S21 to S24 is performed on all polygons included in the tread image 56, in particular, among the polygons included in the wheel image 55 generated in S3, the transmittance is set, and the processing proceeds to S25.

In S25, the CPU 31 sets the transmittance of the polygon included in the wheel image 55, particularly, the polygon included in the side surface image 57. In the present embodiment, the side surface image 57 is set to have the same transmittance regardless of the distance from the road surface. As an example, the transmittance is set to 25%. When the side surface image 57 is divided into a plurality of regions, the transmittance may be set to be different for each region. Although the processing in S25 is performed in the transmittance setting processing in S4, it is not necessary to perform the processing in the transmittance updating processing in S10 (the transmittance of the side surface image 57 does not change even when the wheel rotates), and thus the processing may be omitted. Thereafter, the processing proceeds to S5 or S11.

However, similarly to the tread image 56, the transmittance of the side surface image 57 may be set and updated by the processing in S21 to S24. Even when the transmittance of the side surface image 57 is calculated in the same manner as in the tread image 56, the directions of the vertex normal vectors of the polygons of the side surface image 57 are all the same (that is, $\theta$ in Equation (1) is the same). As a result, the same transmittance is set regardless of the distance from the road surface. Even when the wheel image 55 is rotated, the direction of the vertex normal vector of the polygon of the side surface image 57 does not change before and after the rotation, and the same transmittance is set.

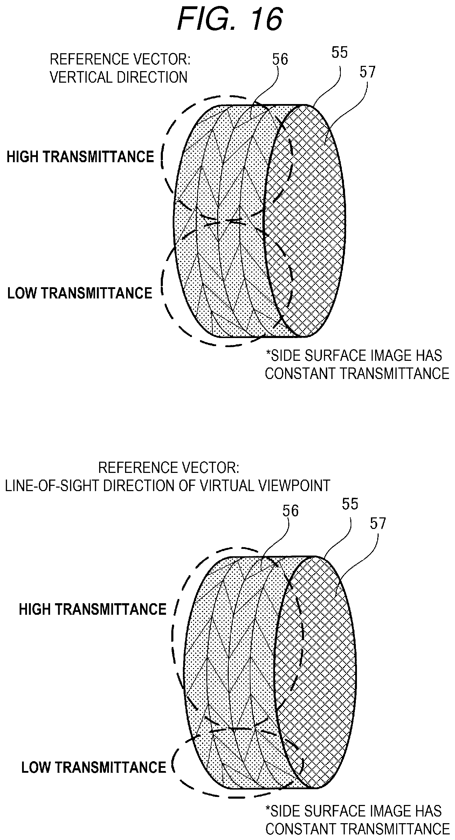

As a result of setting and updating the transmittance of the wheel image 55 in the transmittance setting processing and the transmittance updating processing, the transmittance of the wheel image 55 is set and updated such that, for each polygon forming the surface of the wheel image 55, a polygon indicated by a vertex normal vector having a less difference from the reference vector has a higher transmittance (except for the side surface image 57). That is, as illustrated in Fig. 16, in the wheel image 55, a higher transmittance is basically set in an upper part away from the road surface than in a lower part close to the road surface. When the wheel image 55 is rotated according to the behavior of the vehicle, the transmittance is updated at any time such that the transmittance is higher in the upper part away from the road surface than in the lower part close to the road surface even after the rotation. In the present embodiment, the reference vector is either the "vector corresponding to the vertical direction" or the "vector corresponding to the line-of-sight direction from the virtual viewpoint of the bird's-eye view image". As illustrated in Fig. 16, when the reference vector is the "vector corresponding to the vertical direction", a range in which the transmittance is high is a range centered on a vertex portion of the wheel image 55. In contrast, when the reference vector is the "vector corresponding to the line-of-sight direction from the virtual viewpoint of the bird's-eye view image", a range in which the transmittance is high is centered on a surface facing the virtual viewpoint. That is, when viewed from the virtual viewpoint, the range having a high transmittance is further widened by using the "vector corresponding to the line-of-sight direction from the virtual viewpoint of the bird's-eye view image".

The visibility of the blind spot can be ensured by setting the transmittance to be high in an upper part of the wheel image 55, which has a wide overlapping range with the bird's-eye view image 61 and creates many blind spots. In contrast, the visibility of the wheel image 55 can be ensured by setting the transmittance to be low in a lower part of the wheel image 55. For example, in the vicinity of left and right edges of a tread surface of the wheel image 55, a difference between the vertex normal vector and the reference vector is larger than that in the vicinity of the center, and the transmittance is set to be lower than that in the vicinity of the center. As a result, even in the upper area where the transmittance of the wheel image 55 is high, the left and right edge portions of the tread surface (that is, a contour of the tire) remain displayed, and therefore, the visibility of the wheel image 55 can be ensured.

As described in detail above, according to the driving assistance device 1 and the computer program executed by the driving assistance device 1 of the present embodiment, the assistance image in which the wheel image 55 indicating the wheel is superimposed on the captured image obtained by capturing an image of the surroundings of the host vehicle in the region where the wheel of the host vehicle is located is generated (S3), the assistance image is displayed on the liquid crystal display 4 (S6), the wheel image 55 in the assistance image is rotated around the wheel axis according to the behavior of the host vehicle (S9), the wheel image 55 is set to have a higher transmittance in an upper part away from the road surface than in a lower part close to the road surface, and when the wheel image 55 is rotated, the transmittance of the wheel image 55 is updated according to the rotation of the wheel image 55 according to the setting of the transmittance in the wheel image 55 (S10). Therefore, the visibility of the blind spot is ensured by setting the transmittance to be high in the upper part of the wheel image 55, which has a wide overlapping range with the captured image and creates many blind spots, and the visibility of the wheel image 55 can also be ensured by setting the transmittance to be low in the lower part of the wheel image 55. Therefore, it is possible to achieve both the visibility of the wheel image 55 and the visibility of the blind spot hidden by the wheel image 55.

The wheel image 55 includes the tread image 56 which is in contact with the road surface and the side surface image 57 which is not in contact with the road surface, and in a setting of the transmittance in the wheel image 55, the tread image 56 is set to have a higher transmittance in an upper part away from the road surface than in a lower part close to the road surface, and the side surface image 57 is set to have the same transmittance regardless of a distance from the road surface. Therefore, even when the transmittance of the tread image 56 is increased, the wheel image 55 as a whole can maintain the shape of the wheel by the side surface image 57 displayed with a fixed transmittance.

The three-dimensional shape of the surface of the wheel image 55 is formed by a combination of a plurality of polygons, and a vertex normal vector indicated by the polygon is compared with the reference vector for each of the plurality of polygons, and the transmittance is updated such that the transmittance of the polygon indicated by the normal vector having a less difference is higher (S23, S24). Therefore, even when the wheel image 55 is rotated, the transmittance for each polygon can be easily calculated by using the normal vector of each polygon after the rotation.

The assistance image 65 is a bird's-eye view image viewing the surroundings of the vehicle down in an oblique direction from a virtual viewpoint in the sky, and the reference vector is a vector corresponding to a vertical direction or a vector corresponding to a line-of-sight direction from the virtual viewpoint. Therefore, by defining a direction in which the wheel image 55 is most desired to be transparent as the reference vector, it is possible to calculate the transmittance for each polygon by comparing the reference vector with the normal vector.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

For example, in the present embodiment, as landscape images around the vehicle, the bird's-eye view image and the overhead image generated from the captured image captured by cameras including the front camera 6, the rear camera 7, and the side cameras 8A and 8B are displayed on the liquid crystal display 4. However, it is also possible to display an image captured by the front camera 6 or the rear camera 7 as it is on the liquid crystal display 4, instead of a processed image, and add the wheel image 55 to the image. In the present embodiment, an image to which the wheel image 55 is added is limited to the bird's-eye view image, but the wheel image 55 may be added to the overhead image.

In the present embodiment, the transmittance is calculated using the vertex normal vectors located at the vertices of the polygon, but the transmittance may be calculated using the surface normal instead of the vertex normal. For example, in S23, the transmittance t can be calculated from the above equation (1) using the angle $\Theta$ formed by the surface normal vector of the polygon PL to be processed and the reference vector, and the calculated transmittance t can be set as the transmittance of the entire polygon PL to be processed.

In the present embodiment, the transmittance is calculated using the vertex normal vectors located at the vertices of the polygon, but the transmittance may be set based on a distance D from the virtual viewpoint instead of the vertex normal vectors. For example, the distance D from the virtual viewpoint to each vertex of the polygon is calculated, and the transmittance for each vertex is calculated from the calculated distance D, and the processing in S24 and subsequent steps are performed using the calculated transmittance. A calculation formula is used in which the shorter the distance D is, the higher the calculated transmittance is. Even when the transmittance is set using the distance D as described above, the same effects as when the reference vector is set to the "vector corresponding to the line-of-sight direction from the virtual viewpoint" can be expected.

As the landscape around the vehicle displayed on the liquid crystal display 4, a virtual landscape image (for example, a three-dimensional map image) that is schematically generated may be used instead of the captured image captured by the camera.

In the present embodiment, it is assumed that the assistance image 65 illustrated in Fig. 8 is displayed while traveling by the autonomous driving assistance is performed, but the assistance image 65 illustrated in Fig. 8 may be displayed even while traveling by manual driving is performed.

In the present embodiment, the processing of the driving assistance processing program (Fig. 3) is executed by the driving assistance ECU 10 of the driving assistance device 1, and an execution entity can be changed as appropriate. For example, a control unit of the liquid crystal display 4, a vehicle control ECU, a control unit of a navigation device, and other in-vehicle devices may execute the processing.

**Claims**

**1.** A driving assistance device (1) comprising:

a captured image acquisition unit (10) configured to acquire a captured image obtained by capturing an image of surroundings of a host vehicle;
an assistance image generation unit (10) configured to generate an assistance image (65) in which a wheel image (55) indicating a wheel is superimposed on the captured image in a region where a wheel of the host vehicle is located; and
an image display unit (10) configured to display the assistance image on a display device (4), wherein
the wheel image is set to have a higher transmittance in an upper part away from a road surface than in a lower part close to the road surface.

2. The driving assistance device according to claim 1, wherein

the wheel image includes an image of a ground contact portion which is in contact with the road surface and an image of a ground non-contact portion which is not in contact with the road surface,

in setting the transmittance in the wheel image, the image of the ground contact portion is set to have a higher transmittance in the upper part away from the road surface than in the lower part close to the road surface, and the image of the ground non-contact portion is set to have the same transmittance regardless of a distance from the road surface.

3. The driving assistance device according to claim 1 or 2, wherein

a three-dimensional shape of a surface of the wheel image is formed by a combination of a plurality of polygons, a transmittance is set for each of the plurality of polygons, the driving assistance device further comprises

a behavior acquisition unit (10) configured to acquire a behavior of the host vehicle, and an image updating unit (10) configured to rotate the wheel image in the assistance image around a wheel axis according to the behavior of the host vehicle, and

the image updating unit

rotates, for each of the plurality of polygons, a normal vector indicated by the polygon according to the rotation of the wheel image, and then compares the normal vector after rotation with a reference vector, and updates the transmittance of the wheel image according to the rotation of the wheel image by updating the transmittance such that the transmittance of the polygon indicated by the normal vector having a less difference from the reference vector is higher.

4. The driving assistance device according to claim 3, wherein

the assistance image is a bird's-eye view image viewing the surroundings of the vehicle down in an oblique direction from a virtual viewpoint in the sky, and the reference vector is a vector corresponding to a vertical direction or a vector corresponding to a line-of-sight direction from the virtual viewpoint.

# FIG. 1

# FIG. 2

DRIVING ASSISTANCE ECU

32 RAM

31 CPU

33 ROM

34 FLASH MEMORY

35 VEHICLE INFORMATION DB

36 WHEEL IMAGE DB

CAN OR THE LIKE

OPERATION UNIT

LIQUID CRYSTAL DISPLAY

SPEAKER

FRONT CAMERA

REAR CAMERA

SIDE CAMERA

ULTRA-SONIC SENSOR

OTHER SENSORS

VEHICLE DRIVE UNIT

9A~9L

3    4    5    6    7    8A,8B    37    38

# FIG. 3

```
        START
          │
          ▼  S1
   AUTONOMOUS DRIVING ─── NO ─┐
      ASSISTANCE?             │
          │ YES              │
          ▼  S2              │
   GENERATE BIRD'S-EYE VIEW   │
   IMAGE AND OVERHEAD IMAGE   │
          │                  │
          ▼  S3              │
   GENERATE WHEEL IMAGE       │
          │                  │
          ▼  S4              │
     TRANSMITTANCE            │
   SETTING PROCESSING         │
          │                  │
          ▼  S5              │
   SYNTHESIZE BIRD'S-EYE VIEW │
   IMAGE AND WHEEL IMAGE      │
          │                  │
          ▼  S6              │
   DISPLAY BIRD'S-EYE VIEW IMAGE│
     AND OVERHEAD IMAGE       │
          │                  │
   ┌─────►│  S7              │
   │      ▼                  │
   │  ACQUIRE VEHICLE BEHAVIOR │
   │      │                  │
   │      ▼  S8              │
   │ NO─ FORWARD or REVERSE?  │
   │ │    │ YES   S9         │
   │ │    ▼                  │
   │ │ ROTATE WHEEL IMAGE ACCORDING│
   │ │ TO ACTUAL ROTATION DIRECTION│
   │ │ AND ROTATION SPEED OF WHEEL │
   │ │    │                 │
   │ │    ▼  S10            │
   │ │  TRANSMITTANCE        │
   │ │ UPDATING PROCESSING   │
   │ │    │                │
   │ └───►│  S11           │
   │      ▼                │
   │ NO─ AUTONOMOUS DRIVING  │
   └──── ASSISTANCE IS ENDED?│
          │ YES ◄───────────┘
          ▼
         END
```

## FIG. 4

CONVERT INTO
VIRTUAL VIEWPOINT

6,7,8A,8B

0 (GROUND
SURFACE)

## FIG. 5

41

43

45

44

42

51

52

54

53

## FIG. 6

## FIG. 7

# FIG. 8

65

61 F62

45

55

54

# FIG. 9

56 55 57

## FIG. 10

```
┌────────────────────────────────┐
│    TRANSMITTANCE SETTING        │
│    (UPDATING) PROCESSING        │
└────────────────────────────────┘
              │
              ▼
┌────────────────────────────────┐
│  EACH POLYGON OF TREAD IMAGE    │
└────────────────────────────────┘
              │           ╭─S21
              ▼
┌────────────────────────────────┐
│    ACQUIRE NORMAL VECTOR OF     │
│  EACH VERTEX AT PRESENT TIME    │
│        (AFTER ROTATION          │
│    WHEN WHEEL IS ROTATED)       │
└────────────────────────────────┘
              │           ╭─S22
              ▼
┌────────────────────────────────┐
│    ACQUIRE REFERENCE VECTOR     │
└────────────────────────────────┘
              │           ╭─S23
              ▼
┌────────────────────────────────┐
│   CALCULATE TRANSMITTANCE       │
│  FOR EACH VERTEX FROM NORMAL    │
│ VECTOR AND REFERENCE VECTOR     │
└────────────────────────────────┘
              │           ╭─S24
              ▼
┌────────────────────────────────┐
│   SET TRANSMITTANCE OF          │
│  SURFACE BETWEEN VERTICES       │
│    BASED ON TRANSMITTANCE       │
│  CALCULATED FOR EACH VERTEX     │
└────────────────────────────────┘
              │
              ▼
┌────────────────────────────────┐
│                                 │
└────────────────────────────────┘
              │           ╭─S25
              ▼
┌────────────────────────────────┐
│    SET TRANSMITTANCE            │
│  OF SIDE SURFACE IMAGE          │
│   (ONLY TRANSMITTANCE           │
│   SETTING PROCESSING)           │
└────────────────────────────────┘
              │
              ▼
      ┌───────────────┐
      │    RETURN      │
      └───────────────┘
```

## FIG. 11

## FIG. 12

# FIG. 13

VIRTUAL VIEWPOINT

EXAMPLE 1 OF
REFERENCE VECTOR

HORIZONTAL PLANE

PL

a

EXAMPLE 2 OF
REFERENCE VECTOR

c

b

# FIG. 14

REFERENCE VECTOR

TRANSMITTANCE

ANGLE $\theta$

VERTEX NORMAL VECTOR

1

0          90

180

$\theta$

-1

# FIG. 15

## FIG. 16

REFERENCE VECTOR:
VERTICAL DIRECTION

56  55  57

HIGH TRANSMITTANCE

LOW TRANSMITTANCE

*SIDE SURFACE IMAGE HAS
CONSTANT TRANSMITTANCE

REFERENCE VECTOR:
LINE-OF-SIGHT DIRECTION OF VIRTUAL VIEWPOINT

56  55  57

HIGH TRANSMITTANCE

LOW TRANSMITTANCE

*SIDE SURFACE IMAGE HAS
CONSTANT TRANSMITTANCE

| | Europäisches Patentamt European Patent Office Office européen des brevets | **EUROPEAN SEARCH REPORT** | **Application Number** EP 25 20 1810 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/242834 A1 (SATOH NORIYUKI [JP] ET AL) 27 September 2012 (2012-09-27) * paragraphs [0140] - [0143]; figures 22-24 * | 1-4 | INV. B60R1/27 |
| A,D | JP 5 134504 B2 (CLARION CO LTD) 30 January 2013 (2013-01-30) * the whole document * | 1-4 | |
| A | JP 2017 224881 A (DENSO CORP) 21 December 2017 (2017-12-21) * paragraphs [0023] - [0028]; figure 4 * | 1-4 | |
| | | | TECHNICAL FIELDS SEARCHED (IPC) B60R |

The present search report has been drawn up for all claims

| Place of search | Date of completion of the search | Examiner |
|---|---|---|
| Berlin | 18 February 2026 | Cãlãmar, George |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ..............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 1810

18-02-2026

| Patent document cited in search report | Publication date | Patent family member(s) | | Publication date |
|---|---|---|---|---|
| US 2012242834 A1 | 27-09-2012 | EP | 2512134 A1 | 17-10-2012 |
| | | US | 2012242834 A1 | 27-09-2012 |
| | | WO | 2011070641 A1 | 16-06-2011 |
| JP 5134504 B2 | 30-01-2013 | JP | 5134504 B2 | 30-01-2013 |
| | | JP | 2010114618 A | 20-05-2010 |
| JP 2017224881 A | 21-12-2017 | CN | 109314766 A | 05-02-2019 |
| | | DE | 112017002951 T5 | 28-02-2019 |
| | | JP | 6555195 B2 | 07-08-2019 |
| | | JP | 2017224881 A | 21-12-2017 |
| | | US | 2019126827 A1 | 02-05-2019 |
| | | WO | 2017217422 A1 | 21-12-2017 |

EPO FORM P0459

**REFERENCES CITED IN THE DESCRIPTION**

**Patent documents cited in the description**

- JP 5134504 B